# EUROPEAN PATENT APPLICATION

(11) **EP 4 390 123 A1**
(43) Date of publication of application: **26.06.2024**
(21) Application number: 22214574.0
(22) Date of filing: 19.12.2022
(51) Int. Cl.: F03D 80/50, F03D 80/70

(54) **SYSTEM AND METHOD FOR FLUSHING A BEARING ARRANGEMENT OF A WIND TURBINE**

(71) Applicant: Nordex Energy SE & Co. KG, 22419 Hamburg (DE)
(72) Inventor: AYYILDIZ, Mustafa, 34149 Istanbul (TR); TURKEL, Selim, 34149 Istanbul (TR)
(74) Representative: Epping - Hermann - Fischer

(57) **Abstract**

A system for flushing a bearing (120) of a wind turbine (100) comprises:
- a cover (201), wherein the cover (201) is configured to be mounted on a bearing housing (121) of the bearing (120) to seal an interior space (123) of the bearing (120), the cover (201) comprising a plurality of injection holes (204),
- a pump system (210), wherein the pump system (210) is configured to supply cleaning fluid to the bearing (120),
- a pipe system (220), wherein during use the pipe system (220) is connected to the pump system (210) and to the plurality of injection holes (204) such that cleaning fluid is injectable into the interior space (123) via the plurality of injection holes (204).

## Description

The disclosure relates to a system for flushing a bearing arrangement of a wind turbine, in particular for flushing a rotor bearing arrangement. The disclosure further relates to a method for flushing a bearing arrangement of a wind turbine, in particular for flushing a rotor bearing arrangement.

A wind turbine may include a rotor that includes a rotatable rotor assembly having multiple rotor blades. The rotor blades transform wind energy into a drive torque that drives a generator via a drive train.

It is desirable to provide a system for flushing a bearing arrangement, wherein the system provides a reliable operation. It is further desirable to provide a method for flushing a bearing arrangement of a wind turbine, wherein the method provides a reliable operation of the bearing arrangement.

Embodiments of the disclosure provide a system for flushing a bearing arrangement of a wind turbine. The bearing arrangement comprises a bearing housing. In particular, the bearing arrangement additionally comprises a bearing which is surrounded by the bearing housing. In particular, the bearing is comprised in an interior space of the bearing housing. In particular, the bearing comprises components such as an inner ring, an outer ring, rolling elements for enabling the relative rotation between the inner ring and the outer ring, and a cage for holding the rolling elements together. For example, the bearing is a rotor bearing which is configured to hold and rotatably support a rotor shaft. The bearing arrangement can be another bearing arrangement of the wind turbine, in particular a bearing arrangement in the nacelle of the wind turbine. For example, the bearing arrangement is a yaw bearing arrangement.

The system is configured for flushing the bearing arrangement, in particular for flushing grease from the bearing arrangement. Thus, the bearing arrangement is cleaned, in particular the interior space of the bearing housing, including the spaces between the components of the bearing as well as the spaces next to the bearing.

Embodiments of the disclosure provide a wind turbine, wherein the wind turbine comprises a system according to one of the described embodiments for flushing the bearing.

The system for flushing the bearing arrangement comprises a cover. The cover is configured to be mounted on the bearing housing, in particular on the front side or the rear side of the bearing housing. The cover is configured to seal the interior space of the bearing housing. The cover comprises a plurality of injection holes. The cover in particular comprises at least two injection holes. In other words, the cover comprises in particular two or more injection holes. The holes provide access to the interior space in a mounted state of the cover.

The system for flushing comprises a pump system. The pump system for example comprises one or more pumps. The pump system is configured to supply cleaning fluid to the bearing arrangement. For example, the one or more pumps are configured to supply cleaning fluid with a certain pressure to the interior space of the bearing housing.

The system for flushing comprises a pipe system. During use, the pipe system is connected to the pump system and to the plurality of injection holes. The pipe system is connected such that cleaning fluid is injectable into the interior space via the plurality of injection holes. The pump system is configured to supply cleaning fluid via the plurality of injection holes to the interior space of the bearing housing. In particular, the system is configured such that cleaning fluid is simultaneously injectable into the interior space via two of the injection holes or more than two of the injection holes. According to embodiments, cleaning fluid is injectable simultaneously via all of the injection holes.

The system for flushing the bearing arrangement allows an injection of the cleaning fluid for cleaning the inside of the bearing arrangement. For example, the cleaning fluid comprises petroleum or any other type of cleaner suitable for removing grease and other dirt from the bearing arrangement. For example, the cleaning fluid is also configured to clean the bearing arrangement from wear particles like small metallic particles and other small dirt particles together with the grease or other lubricant.

Thus, it is possible to clean the bearing arrangement, for example the rotor bearing arrangement, in an operable state of the wind turbine. A replacement of the bearing arrangement can be avoided. Furthermore, as the pipe system is connected to the plurality of injection holes, it is possible to inject the cleaning fluid into all regions of the bearing arrangement targeted by the plurality of injection holes without the need of disconnecting the pipe system from injection holes and reconnecting the pipe system to further injection holes of the plurality of injection holes. After cleaning, new grease can be filled into the bearing arrangement. Thus, the system helps to prevent failure of the bearing and thereby increases reliability of the bearing and the wind turbine. The lifetime of the bearing can be increased, for example by three to five years or more.

According to further embodiments, the pipe system comprises two or more pipe assemblies. The pipe assemblies are separately suppliable with cleaning fluid. During use, the pipe assemblies are each connected to the pump system and to different injection holes of the plurality of injection holes. In particular, the pipe assemblies are each connected to the pump system and to a group of neighboring injection holes of the plurality of injection holes. For example, 4 pipe assemblies are connected to a total of 16 injections holes, wherein each pipe assembly is connected to four neighboring injection holes. In this example, during use, cleaning fluid is injectable through at least four injection holes which are connected to a common pipe assembly. Thus, it is possible to inject cleaning fluid via one of the pipe assemblies, while no cleaning fluid is injected via the other pipe assembly. This allows to target the injection of the cleaning fluid towards specific regions of the bearing arrangement. In particular, other specific regions are not targeted with cleaning fluid.

In one embodiment, each pipe assembly is connected to a single injection hole. In another embodiment, at least one pipe assembly is connected to more than one injection hole of the plurality of injection holes.

According to further embodiments, the system for flushing comprises two or more flow control devices. For example, the flow control device comprises a valve, in particular an on-off valve. The flow control devices are each associated with a respective pipe assembly. For example, the flow control devices are arranged at or near a connection interface between the pump system and the respective pipe assemblies. The flow control devices are each configured to allow or prevent a flow of the cleaning fluid through the respective pipe assembly. The system for flushing comprises a control system configured to individually operate the flow control devices for selectively allowing or blocking a flow of cleaning fluid through the respective pipe assemblies. Thus, with the flow control devices and the control system it is possible to selectively allow or block cleaning fluid supply to the specific regions of the bearing arrangement, in particular to the regions targeted by the injection holes to which the respective pipe assemblies are connected. This is particularly advantageous in case the pump system has a small pump capacity. In this case, the supply of cleaning fluid via one single pipe assembly or via one subset of pipe assemblies at a time enables the cleaning fluid to be injected into the interior space of the bearing housing with the required flow rate and pressure for flushing purposes.

According to further embodiments, the system for flushing comprises a plurality of pumps, wherein each pump is connected to one pipe assembly of the two or more pipe assemblies. By activating or deactivating the respective pump, fluid can be supplied to the respective pipe assembly. Thus, no specific flow control devices are necessary.

According to further embodiments, the pipe system comprises nozzles to increase the velocity of the cleaning fluid. The pipe system is connected to the injection holes via the nozzles. In particular, the nozzles are spraying nozzles enabling the injected cleaning fluid to be sprayed into the interior space of the bearing housing. In particular, in addition to increasing the velocity of the cleaning fluid, the nozzles also influence the flow direction of the cleaning fluid when injected into the interior space of the bearing housing. The high velocity of the cleaning fluid when injected into the interior space enables a physical cleaning of said interior space. As a result, an effective removal of grease and other dirt can be achieved without the need of rotating the bearing. Therefore, bearing damage due to a bearing rotation during the flushing operation can be avoided.

According to further embodiments, the plurality of injection holes is arranged along at least one part of a circumference of the bearing arrangement, in particular along the whole circumference of the bearing arrangement. Thus, the cleaning fluid can be injected at all regions of the bearing arrangement via the plurality of injection holes. In case the plurality of injection holes is arranged along only one part of the circumference of the bearing arrangement, the cover may comprise additional injection holes arranged along the remaining part of the circumference of the bearing arrangement. In this case, the flushing of the bearing arrangement along the remaining part of the circumference may for example be achieved by disconnecting the pipe system from the plurality of injection holes and by reconnecting the pipe system to the additional injection holes arranged along the remaining part of the circumference.

According to further embodiments, the pump system and the pipe system are configured to inject the cleaning fluid with a pressure suitable for physical cleaning of the bearing arrangement, in particular for physically removing grease from the bearing arrangement. For example, the pressure is 8000 kPa or more, for example 12000 kPa. Other values for the pressure are, of course, possible. The cleaning fluid is injectable with a pressure which is high enough to physically clean the bearing arrangement, particularly without the need of a rotation of the bearing. The cleaning fluid can be injected under pressure to the regions of the bearing arrangement that should be cleaned and, due to the properties of the cleaning fluid and the influence and impact of the fluid under pressure, old grease is removed from the parts of the bearing arrangement.

According to further embodiments, the system for flushing comprises a multitude of different covers. Each cover of the multitude of covers is configured to mate with a different type of bearing arrangement. Thus, the system can be used for flushing different kinds of bearing arrangements, wherein in particular the pump system and the pipe system and other elements of the system for flushing can be reused for different kinds of bearing arrangements. It is just necessary to select the suitable cover that fits the bearing arrangement which should be cleaned.

According to further embodiments, the cover additionally comprises a drain hole for draining liquid from the bearing arrangement. In particular, the drain hole enables the draining of liquid from the interior space of the bearing housing. The drain hole in particular is a hole in the cover, preferably arranged at the bottom of the cover. The drain hole is a hole in addition to the plurality of injection holes. For example, the drain hole is configured to drain liquid into a waste container. In particular, no exhaust pump is needed, particularly because the cleaning fluid is injected into the bearing with high pressure. In addition, the liquid flows naturally out of the bottom of the bearing. The liquid, in particular, consists of used cleaning fluid and removed grease and other dirt.

In an alternative embodiment, the liquid is drained into a filter for separating the removed grease and dirt from the cleaning fluid. The cleaning fluid can then be conducted to a pump to be reused, such that the cleaning fluid circulates along a closed loop circuit.

Embodiments of the disclosure provide a method for flushing a bearing arrangement of a wind turbine, in particular for flushing grease from a bearing arrangement, in particular a rotor bearing arrangement. The method comprises:
- removing a bearing cover from a bearing housing of the bearing arrangement,
- mounting a cover on the bearing housing, wherein the cover comprises a plurality of injection holes,
- connecting a pipe system to the plurality of injections holes, wherein the pipe system is connected to a pump system for supplying cleaning fluid to the bearing arrangement,
- injecting cleaning fluid into an interior space of the bearing housing via the plurality of injection holes.

Features and advantages of the described system for flushing also apply to the described method for flushing and vice versa.

With the method for flushing the bearing arrangement, the bearing arrangement can be cleaned without the need for removal of the bearing arrangement from the wind turbine. The flushing and the cleaning of the bearing arrangement help to prevent damage to the bearing. The lifetime of the bearing can be extended by a couple of years, for example three to five years or more.

According to further embodiments in which the pipe system comprises two or more pipe assemblies which are separately suppliable with cleaning fluid and are each connected to the pump system and to different injection holes of the plurality of injection holes, cleaning fluid is selectively supplied to the pipe assemblies such that the cleaning fluid is injected into the interior space via the injection holes connected to the selected pipe assemblies. This is, for example, achieved via the flow control devices specified above. Thus, it is possible to select one single pipe assembly or one subset of pipe assemblies at a time. It is also possible to select all pipe assemblies, such that cleaning fluid is injected into the interior space via all of the injection holes in a simultaneous manner.

According to further embodiments, cleaning fluid is supplied to each of the pipe assemblies according to a predefined sequence. The sequence is predefined such that the regions are targeted with cleaning fluid in sequence and successively to enable a reliable cleaning of the bearing. For example, upper cleaning holes are supplied with cleaning fluid before lower injection holes are supplied with cleaning fluid. In particular, the predefined sequence is configured such that the cleaning time and/or the amount of injected cleaning fluid may differ for each pipe assembly, depending on the cleaning needs of the respective region of the bearing arrangement targeted by the injection holes connected to the respective pipe assembly.

According to further embodiments, the cover is selected out of a multitude of different covers such that the cover mates with the bearing arrangement whose bearing cover has been removed. Each cover of the multitude of covers is configured to mate with a different type of bearing arrangement. Thus, the method can be used with different kinds of bearing arrangements and it is just necessary to select the right cover that fits to the bearing arrangement that should be cleaned.

According to further embodiments, the bearing arrangement is kept still during injection of the cleaning fluid. In other words, the bearing is not rotated during the cleaning method. Thus, a rotation of the bearing in a state in which the bearing is not well lubricated because of the cleaning fluid can be avoided. Therefore, bearing damage during the flushing operation can be avoided. In particular, an effective removal of grease and other dirt without bearing rotation can be achieved by including nozzles in the pipe system to increase the velocity of the injected cleaning fluid and by connecting the pipe system to the plurality of injection holes via the nozzles. In situations in which the grease located in some regions of the bearing arrangement is particularly dry, the bearing may however be slightly rotated, in particular over a part of the circumference, until the dry grease reaches the bottom region of the bearing arrangement. After remaining in the cleaning fluid bath formed by the cleaning fluid accumulated in the bottom of the bearing arrangement for some time, the dry grease gets softer and can then be effectively removed from the bearing arrangement.

According to further embodiments, the cover additionally comprises a drain hole. Liquid is drained from the bearing arrangement through the drain hole. In particular, liquid is drained from the interior space of the bearing housing through the drain hole. The liquid in particular comprises used cleaning fluid with old grease and other dirt particles which are flushed out of the bearing arrangement with the cleaning fluid. It is possible to drain the liquid into a waste container without additional support. Optionally, it is also possible to pump the liquid out of the bearing arrangement via the drain hole. The liquid can be disposed after a single use or can be filtered such that the cleaning fluid can be reused several times.

According to further embodiments, the cleaning fluid is injected into the interior space in a pressurized condition, in particular with a pressure of more than 8000 kPa. As described above, physical cleaning of the bearing arrangement is realized.

The present invention will be further described with reference to the accompanying drawings. In the drawings, elements of the same structure and/or functionality may be referred to by the same reference signs. It is to be understood that embodiments shown in the figures are illustrative representations and are not necessarily drawn to scale.
Figure 1 is a schematic view of a wind turbine according to an embodiment,
Figure 2 is a schematic view of a system for flushing according to an embodiment,
Figure 3 is a schematic view of a rotor bearing arrangement according to an embodiment, and
Figure 4 is a schematic view of a flowchart of a method according to an embodiment.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention defined by the appended claims.

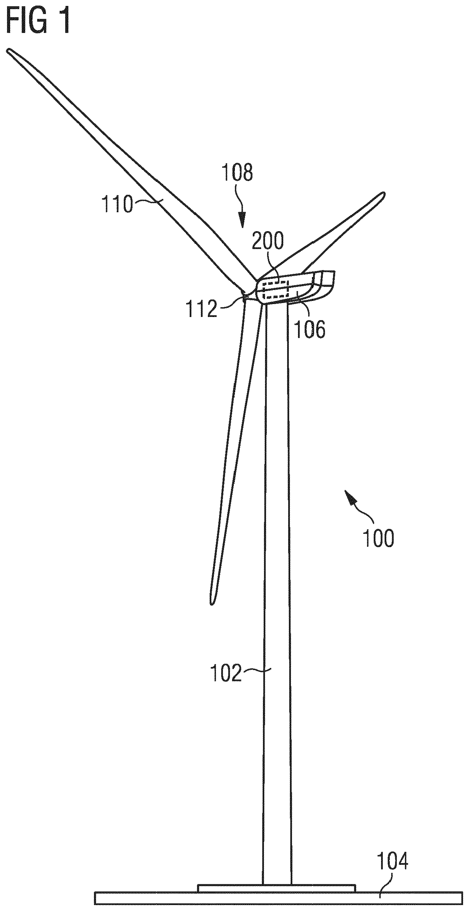

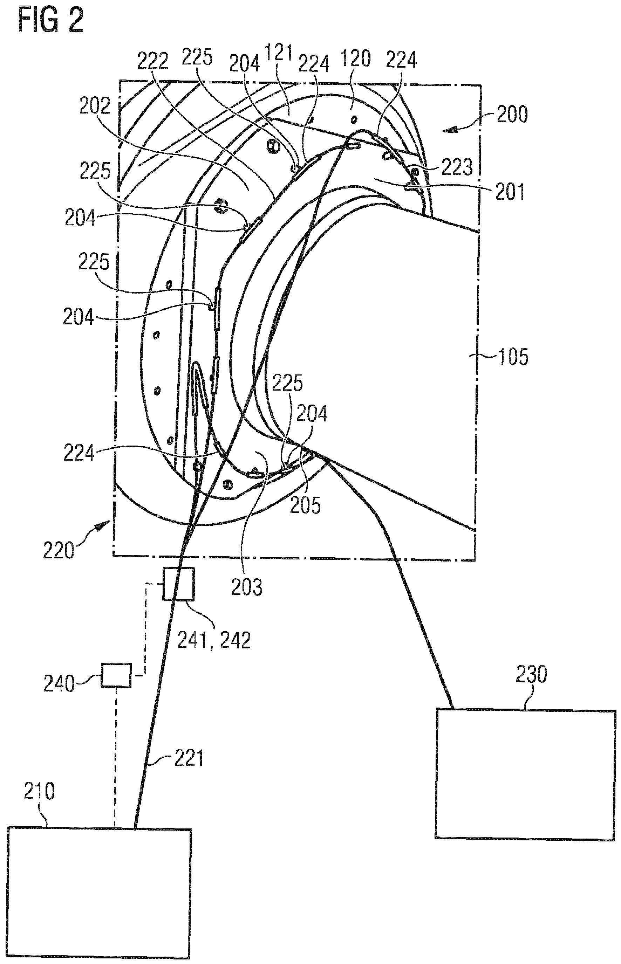

As shown in Figure 1, a wind turbine 100 comprises a tower 102. The tower 102 is connected to a foundation 104 fixed on a ground. The foundation 104 is formed in and supported by the ground. On a top end of the tower 102 opposite to the foundation 104 a nacelle 106 is arranged. The nacelle 106 houses the drive train. Inside the nacelle 106, for example, a generator is arranged which is connected via the drive train with a rotor 108, the drive train comprising e.g. a gearbox and a rotor shaft 105 (Figure 2). The rotor 108 comprises several rotor blades 110. The rotor blades 110 are mounted on a rotor hub 112. The rotor hub 112 is connected to the rotor shaft 105.

The rotor 108 is driven in operation by an airflow, for example wind. The rotational movement of the rotor 108 is transmitted via the drive train to the generator. The generator converts the energy of the rotor 108 into electrical energy.

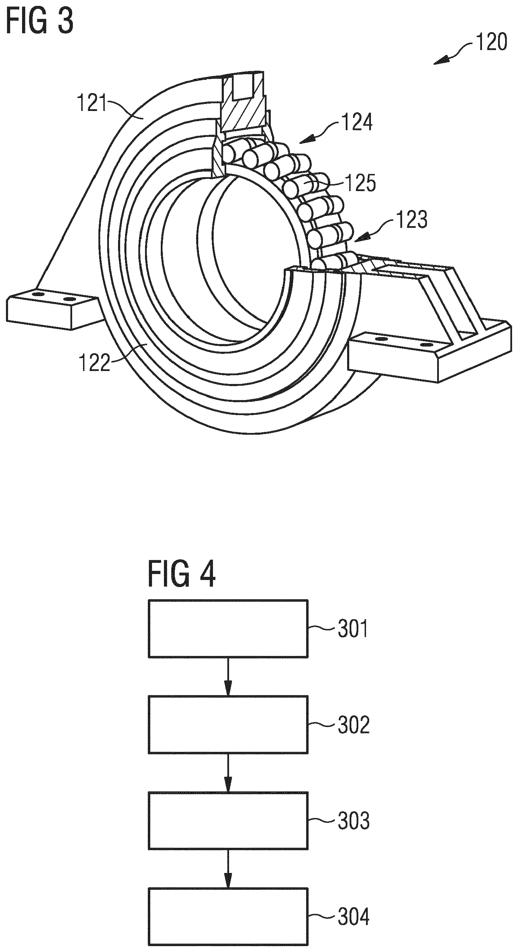

The wind turbine comprises a system 200 for flushing a bearing arrangement 120 (Figures 2 and 3). The flushing system 200 is configured to flush the bearing arrangement 120 for cleaning the bearing arrangement 120 and for removing old lubricant like grease and dirt particles. This makes it possible to insert new, clean grease into the bearing arrangement 120. In particular, it is not necessary to remove the bearing arrangement 120 from the nacelle 106 . The bearing arrangement 120 can be cleaned in the nacelle 106.

Figure 2 schematically shows the flushing system 200 according to an embodiment. Figure 2 shows the flushing system in a ready-to-use situation in which the flushing system 200 is installed on the bearing arrangement 120.

According to the shown embodiment the bearing arrangement 120 is a rotor bearing arrangement. The rotor bearing arrangement 120 comprises a rotor bearing housing 121 and a rotor bearing 124 (not shown in Figure 2) surrounded by the rotor bearing housing 121. The rotor shaft 105 is rotatably supported by the rotor bearing 124. The flushing system 200 can be used with other bearing arrangements of the wind turbine 100 as well.

The bearing arrangement 120 of Figure 2 is also shown in Figure 3. As can be seen in Figure 3, the bearing housing 121 houses an interior space 123 in which the bearing 124 is located. The bearing 124 comprises an inner ring, an outer ring, rolling elements 125 enabling the relative rotation between the inner ring and the outer ring, and a cage to hold the rolling elements together. The inner ring is connected to the shaft 105 and the outer ring is connected to the bearing housing 121. The interior space 123 is sealed by a bearing cover 122 on the front side and/or on the rear side of the bearing housing 121 during normal operation, wherein the front side corresponds for example to the side facing the rotor 108 and the rear side corresponds for example to the side opposite to the rotor 108.

As shown in Figure 2, for cleaning the bearing arrangement 120 the bearing cover 122 is removed and a cover 201 of the flushing system 200 is installed. For example, the cover 201 comprises two cover parts 202, 203. The two cover parts 202, 203 are configured such that together they fit around the shaft 105. It is also possible to have more than two cover parts 202, 203. The cover parts 202, 203 are configured to seal the interior space 123 together instead of the bearing cover 122.

The cover 201, in particular the cover parts 202, 203, comprise a plurality of injection holes 204. The injection holes 204 provide a passage through the cover 201 along the axial direction of the shaft 105. The injection holes 204 are arranged circularly around the shaft 105. For example, the injection holes 204 are equally spaced from each other and equally distributed around the shaft 105. It is also possible that the space between two adjacent injection holes 204 is different around the shaft 105.

The cover 201 comprises a drain hole 205. The drain hole 205 is provided in addition to the injection holes 204. In particular, the drain hole 205 is arranged at a lower side of the cover 201 in a state in which the cover 201 is mounted to the bearing housing 121. It is possible that the cover 201 comprises more than one drain hole 205, for example two or more drain holes 205.

The flushing system 200 comprises a pump system 210. The pump system 210 comprises one or more pumps which are configured to supply fluid under pressure to a pipe system 220. For example, a suction side of the pump 210 is fluidically coupled to a cleaning fluid tank (not explicitly shown). An output of the pump 210 is fluidically coupled with the pipe system 220.

The pipe system 220 is connected on one side with the pump 210. The other side of the pipe system 220 is connected to the injection holes 204.

For example, the pipe system 220 comprises pipes 221. Each of these pipes 221 may for example either be a flexible pipe (such as a hose) or a rigid pipe. The pipes 221 are grouped in two or more pipe assemblies 222, 223. Each pipe assembly 222, 223 comprises one or more pipes 221. The pipes 221 of a pipe assembly 222, 223 are connected in series via connectors 224. Each pipe assembly 222, 223 comprises nozzles 225 which are connected to or integrated in at least some of the connectors 224. Each injection hole 204 is connected to a nozzle 225 of one of the pipe assemblies 222, 223, such that cleaning fluid delivered from the pump system 210 can be supplied to the injection holes 204 and injected and sprayed into the interior space 123 through the injection holes 204.

For example, the cover 201 comprises 16 injection holes 204. The pipes 221 are grouped in four pipe assemblies 222, 223, such that each pipe assembly 222, 223 is connected to four injection holes 204. Cleaning fluid which is supplied to one pipe assembly 222 is injected via four injection holes 204 simultaneously. It is possible to supply cleaning fluid via all pipe assemblies 222, 223 to all injection holes 204 at the same time. It is also possible to supply cleaning fluid to just one pipe assembly 222. Cleaning fluid is thus injected through either all of the injection holes 204 simultaneously or through just a part of the injection holes 204. In some embodiments, the connectors 224 and/or the nozzles 225 of a pipe assembly 222 may be equipped with valves allowing or preventing the flow of cleaning fluid, such that it is possible to supply cleaning fluid to only a part of the injection holes connected to the pipe assembly 222.

The cleaning fluid is injected with a pressure high enough for physical cleaning. Due to the injection of the cleaning fluid through a plurality of the injection holes 204, it is not necessary to rotate the shaft 105 during cleaning of the bearing arrangement 120. Due to the simultaneous injection through a plurality of the injection holes 204 and, in particular, through all injection holes 204 at least in succession, the complete bearing arrangement 120 can be cleaned without rotation of the bearing 120. In particular, the complete interior space 123 of the bearing housing 121, including spaces between the inner ring, rolling elements 125, outer ring and cage of the bearing 124 as well as spaces next to the bearing 124, can be cleaned without rotation of the bearing 120.

The selection of which of the pipe assemblies 222, 223 should supply cleaning fluid and which should not supply cleaning fluid is realized in particular by a control system 240 and flow control devices 241, 242. The control system for example is a control device with a processor and memory. For example, a flushing method is stored in the memory and can be executed by the processor.

The flow control devices 241, 242 are, for example, valves that can be opened and closed dependent on control signals provided by the control system 240. For example, a specific sequence for the supply of cleaning fluid to the respective pipe assemblies 222, 223 is stored in the control system 240. The flow control devices 241, 242 are opened and closed according to that specific sequence. For example, the flushing system 200 comprises more than two flow control devices 241, 242, in particular as many flow control devices 241, 242 as pipe assemblies 222, 223. Each pipe assembly 222, 223 comprises a corresponding flow control device 241, 242.

According to further embodiments, the flow control devices 241, 242 can be omitted. For example, the pump system 210 comprises one pump for each pipe assembly 222, 223. For example, in the embodiment in which the flushing system 200 comprises four pipe assemblies 222, 223, the pump system 210 comprises four pumps, one pump per pipe assembly 222, 223. The pipe assembly is supplied with cleaning fluid by activating the corresponding pump.

According to further embodiments, the pipe system 220 is connected with one single pump of the pump system 210 such that cleaning fluid is injected via all injection holes 204 simultaneously by activating the pump. In this embodiment, it is not possible to select a part of the injection holes 204 via which cleaning fluid is injected and another part of injection holes 204 via which no cleaning fluid is injected.

The cleaning fluid is sprayed into the interior space 123 to detach and remove old grease and dirt from the bearing 124 and from the inner sides of the bearing housing 121. The cleaning fluid, together with the removed grease and dirt, flows through the interior space 123 and in particular flows down in the bearing arrangement 120 towards the drain hole 205.

The drain hole 205 is configured to let out liquid. In particular, the liquid let out of the interior space 123 consists of the used cleaning fluid, grease and dirt. A waste container 230 is connected with the drain hole 205 such that the liquid can be collected in the waste container 230 and disposed later on.

According to further, not explicitly shown, embodiments, instead of the waste container 230 the flushing system 200 comprises a cleaning fluid reuse system. For example, the used cleaning fluid with the grease and dirt is drained into a filter for filtering the cleaning fluid. The filtered cleaning fluid can be reused and conducted to the pump system 210. For example, an exhaust pump is connected with the drain hole 205 to pump out the liquid comprising the used cleaning fluid through the drain hole 205.

Figure 4 schematically shows a flowchart of a method for flushing the bearing arrangement 120.

In a step 301 the bearing cover 122 is removed from the bearing housing 121 of the bearing arrangement 120. In particular, screws are released so that the bearing cover 122 can be removed.

In a step 302, the cover 201 is mounted on the bearing housing 121. The cover 201 with the plurality of injection holes 204 is fixed to the bearing housing 121 instead of the bearing cover 122. In particular, it is possible to mount the cover 201 on the bearing housing 121 by using the screw holes in the bearing housing 121 that are also used to mount the bearing cover 122. It is not necessary to modify the bearing housing 121 to mount the cover 201 with the injection holes 204. The cover 201 is selected out of a plurality of different covers such that the cover 201 mates the type and kind of the bearing arrangement 120. For example, the cover 201 is selected such that it can be arranged around the shaft 105 in the case that the bearing arrangement 120 is a rotor bearing arrangement.

In a step 303 the pipe system 120 is connected to a plurality of injection holes 204. The pipe system 120 is also connected to the pump system 210. For example, the cover 201 comprises further injection holes in addition to the plurality of injections holes 204, such that a part of the injection holes in the cover 201 is not connected to the pipe system 120. It is possible to close these further injection holes 204 with plugs. For example, the plurality of injection holes 204 consists of eight injection holes 204 connected with the pipe system 120 and the further injection holes are closed. It is also possible that the cover 201 does not comprise any further injection holes in addition to the plurality of injection holes 204, such that all of the injection holes of the cover 201 are connected to the pipe system 120.

In a step 304, cleaning fluid is injected into the interior space 123 of the bearing housing 121 via the plurality of injection holes 204 connected to the pipe system 120. In case the cover 201 is provided with further injection holes through which cleaning fluid is to be injected, it is possible to repeat steps 303 and 304 successively with the further injection holes until cleaning fluid has been injected through all of the injection holes of the cover 201. For example, in case the cover 201 comprises eight injection holes 204 connected to the pipe system 120 and eight further injection holes, eight plugs are removed and the pipe system 120 is connected to the eight further injection holes which were previously closed with the plugs. The plugs are used to close the plurality of injection holes 204 which were previously connected to the pipe system 120.

The flushing system 200 according to the different described embodiments and the flushing method according to the different embodiments allow cleaning fluid to be injected directly in the interior space 123 forcleaning of the bearing arrangement 120. It is possible to inject cleaning fluid into different regions of the bearing arrangement 120 consecutively or to inject cleaning fluid into all regions simultaneously. The cleaning and flushing of the bearing 120 arrangement is for example a prophylactic treatment at regular time intervals to exchange the grease for lubricating the bearing 124. It is also possible to replace the grease in the case of bearing damage which also extends the lifetime of the bearing 120.

### References

- 100: wind turbine
- 102: tower
- 104: foundation
- 105: shaft
- 106: nacelle
- 108: rotor
- 110: rotor blade
- 112: rotor hub
- 120: bearing arrangement
- 121: bearing housing
- 122: bearing cover
- 123: interior space
- 124: bearing
- 125: rolling element
- 200: system for flushing
- 201: cover
- 202, 203: cover parts
- 204: injection hole
- 205: drain hole
- 210: pump system
- 220: pipe system
- 221: pipe
- 222, 223: pipe assembly
- 224: connector
- 225: nozzle
- 230: waste container
- 240: control system
- 241, 242: flow control devices
- 301 - 304: method steps

## Claims

1. System for flushing a bearing arrangement (120) of a wind turbine (100), the bearing arrangement comprising a bearing housing (121), the system comprising
- a cover (201), wherein the cover (201) is configured to be mounted on a bearing housing (121) to seal an interior space (123) of the bearing housing (121), the cover (201) comprising a plurality of injection holes (204),
- a pump system (210), wherein the pump system (210) is configured to supply cleaning fluid to the bearing arrangement (120),
- a pipe system (220), wherein during use the pipe system (220) is connected to the pump system (210) and to the plurality of injection holes (204) such that cleaning fluid is injectable into the interior space (123) via the plurality of injection holes (204).

2. System according to claim 1, wherein the pipe system (220) comprises two or more pipe assemblies (222, 223) which are separately suppliable with cleaning fluid, wherein during use the pipe assemblies (222, 223) are each connected to the pump system (210) and to different injection holes (204) of the plurality of injection holes (204).

3. System according to claim 2, comprising
- two or more flow control devices (241, 242) which are each associated with a respective pipe assembly (222, 223) and configured to allow or prevent a flow of the cleaning fluid through the respective pipe assembly (222, 223),
- a control system (240) configured to individually operate the flow control devices (241, 242) for selectively allowing or blocking a flow of cleaning fluid through the respective pipe assemblies (222, 223).

4. System according to one of claims 1 to 3, wherein the pipe system (220) comprises nozzles (225) to increase the velocity of the cleaning fluid, wherein the pipe system (220) is connected to the plurality of injection holes (204) via the nozzles (225).

5. System according to one of claims 1 to 4, wherein the plurality of injection holes (204) is arranged along at least one part of a circumference of the bearing arrangement (120), in particular along the whole circumference of the bearing arrangement (120).

6. System according to one of claims 1 to 5, wherein the pump system (210) and the pipe system (220) are configured to inject the cleaning fluid with a pressure suitable for physical cleaning of the bearing arrangement (120), in particular for physical removing grease from the bearing arrangement (120).

7. System according to one of claims 1 to 6, comprising a multitude of different covers (201), wherein each cover (201) of the multitude of covers (201) is configured to mate with a different type of bearing arrangement (120).

8. System according to one of claims 1 to 7, wherein the cover (201) additionally comprises a drain hole (205) for draining liquid from the bearing arrangement (120).

9. Method for flushing a bearing arrangement (120) of a wind turbine (100), comprising:
- removing a bearing cover (122) from a bearing housing (121) of the bearing arrangement (120),
- mounting a cover (201) on the bearing housing (121), wherein the cover (201) comprises a plurality of injection holes (204),
- connecting a pipe system (120) to the plurality of injections holes (204), wherein the pipe system (120) is connected to a pump system (210) for supplying cleaning fluid to the bearing arrangement (120),
- injecting cleaning fluid into an interior space (123) of the bearing housing (121) via the plurality of injection holes (204).

10. Method according to claim 9, wherein the pipe system (220) comprises two or more pipe assemblies (222, 223) which are separately suppliable with cleaning fluid, wherein the pipe assemblies (222, 223) are each connected to the pump system (210) and to different injections holes (204) of the plurality of injection holes, the method comprising:
- selectively supplying cleaning fluid to the pipe assemblies (222, 223), such that the cleaning fluid is injected into the interior space (123) via the injection holes (204) connected to the selected pipe assemblies (222, 223).

11. Method according to claim 10, comprising:
- supplying cleaning fluid to each of the pipe assemblies (222, 223) according to a predefined sequence.

12. Method according to claims 9 to 11, comprising:
- selecting the cover (201) out of a multitude of different covers (201), such that the cover (201) mates the bearing arrangement (120) whose bearing cover (122) has been removed, wherein each cover (201) of the multitude of covers (201) is configured to mate with a different type of bearing arrangement (120).

13. Method according to one of claims 9 to 12, comprising:
- keeping the bearing arrangement (120) still during injecting of the cleaning fluid.

14. Method according to one of claims 9 to 13, wherein the cover (201) additionally comprises a drain hole (205), the method comprising:
- draining liquid from the interior space (123) through the drain hole (205).

15. Method according to one of claims 9 to 14, comprising:
- injecting cleaning fluid into the interior space (123) in a pressurized condition, in particular with a pressure of more than 8000 kPa.
